# EUROPEAN PATENT SPECIFICATION

(11) **EP 2 471 746 B1**
(45) Date of publication and mention of the grant of the patent: **08.05.2013**
(21) Application number: 10425396.8
(22) Date of filing: 28.12.2010
(51) Int. Cl.: C02F 1/20, B01D 19/00, B01D 5/00, C02F 103/06, C02F 101/32, C02F 101/36

(54) **Method for treating liquid wastes by closed circuit stripping with cryogenic condensation system**
Verfahren zur Behandlung von flüssigen Abfallstoffen durch Strippen in einem geschlossenen Kreislauf mit Tieftemperaturkondensationssystem
Procédé de traitement des déchets liquides par extraction de circuit fermé avec système de condensation cryogène

(43) Date of publication of application: 04.07.2012
(73) Proprietor: Simam S.p.A., 60019 Senigallia (AN) (IT)
(72) Inventor: Rossi, Massimo, 60019 Senigallia AN (IT)
(74) Representative: Germinario, Claudio

(56) References cited:
- WO-A2-2008/118111
- BE-A6- 1 011 802
- US-A- 4 246 291
- US-A1- 2005 044 991
- US-A1- 2008 000 821

## Description

The present invention relates to a method for treating aqueous liquid waste containing volatile, chlorinated and not chlorinated, organic compounds, by stripping and cryogenic condensation system of the contaminants desorbed by means of liquid nitrogen and a closed circuit plant for treating said waste.

### State of art

In the technological field of the present invention under the term liquid waste liquids which have to be treated to reduce the polluting content thereof are meant. In particular, the invention relates to the treatment of contaminated ground waters drained from the underground of polluted sites therefor the law provides for the drainage with the purpose of reclamation of the polluted site. Such ground waters are drained from a series of wells called "hydraulic barriers" to be treated then in "TAF" - ("Trattamento Acque di Falda") ("Ground Water Treatment") plants. Based upon the European as well Italian (Royal Decree 152/'06) law the polluted ground waters are to be considered waste and are identified by the EWC code 19.13.08 and 19.13.07*. EWC code means European Waste Code (directive 75/442/EEC)

Among the contaminants those belonging to the following classes can be mentioned: metallic ions (such as Fe, Mn, As, Al, Cd, Zn, etc), inorganic compounds (sulphates, sulphides, nitrites and nitrates etc.), both aliphatic and aromatic (for example BTEX) volatile organic compounds which can be also halogenated (for example 1,2-dichloroethane and the like). Whereas the inorganic compounds are generally removed by means of chemical-physical treatments and processes of ionic exchange or processes of permeation on membranes, generally the volatile organic compounds are removed by stripping and subsequent adsorbtion on active carbon. These operating methodologies allow obtaining good results for what concerns the qualitative features of the refluent products, but they produce considerable management costs together with serious consequences as far as the environmental impact is concerned due to the high amounts of produced waste per cubic meter of treated water.

A conventional treatment scheme can be outlined as follows: the waters to be treated first of all are stripped with an amount of stripping gas (N2 or air) at a flow of about 400 Nmc/h. The stripper efficiency reaches in a precautionary way only 95%. The stripping gas is depurated by means of adsorbtion on unloadable containers of active carbons. After treatment on active carbons the gas is discharged in atmosphere. The waters in the column bottom before being discharged onto the receptor body are subjected, instead, to a finishing procedure on array of active carbons on water side.

The Italian patent IT 1359970 in the name of the present Applicant relates to a method providing a step of closed circuit stripping of the liquid residues to be treated and a step of cryogenic condensation with liquid nitrogen. According to this method the waters to be treated first of all are stripped with an amount of stripping gas (N2 or air) with a flow of about 400 Nmc/h. The stripper efficiency reaches in a precautionary way only 95%. The stripping gas first of all is cooled down at -70 °C thanks to the frigs of the liquid nitrogen to allow the condensation/solidification of dichloroethane and of the other compounds which can be removed at low temperatures. The removal efficiency of the cryogenic condensation system is put, in a precautionary way, at 95% (working experiences on the just described system have demonstrated to guarantee removal efficiencies of dichloroethane equal to about 99%). At the exit of the cryogenic condensation section the residual compounds present in the stripping circuit are removed by adsorbtion on activated carbon on air side. After the treatment on active carbons the gas is introduced again into the stripper for a new stripping cycle, thus by avoiding the discharge in atmosphere. The waters in the column bottom before being discharged onto the receptor body are subjected, instead, to a finishing procedure on array of active carbons on water side.

However, this solution has the problem of a high use of nitrogen and energy for maintaining the efficiency of the cryogenic condensation column. Furthermore, even if with respect to the prior art an improvement is obtained in the sense that the product outgoing from the stripper has a smaller amount of AOX, in particular of dichloroethane, operating difficulties arise during the condensation phase. In fact, while the dichloroethane distributes between the two exchangers of which the condensation unit is usually constituted, the water freezes immediately and it tends to stay in the first exchanger, by clogging soon the condensation unit with consequent service interruption and need for starting another column.

The present invention relates a method for treating aqueous liquid waste, in particular contaminated ground waters, wherein the gas after the stripping procedure, before being cooled down, advantageously treated with liquid nitrogen to allow removing the organic load by condensation, it is subjected to a precondensation phase and, after, to a treatment on activated carbons that provides for the removal of the non condensable pollutant to allow the reuse thereof in a closed circuit system.

Therefore, the object of the present invention is the method for treating liquid waste according to claim 1.

### Brief description of the figures

Three figures are enclosed with the present description showing:
figure 1 is a scheme of plant for stripping and adsorbtion on active carbons;
figure 2 is a scheme of plant with closed circuit stripping with cryogenic condensation system and
figure 3 is a scheme of plant with closed circuit stripping with cryogenic condensation system and precondensation by means of heat pump.

The method according to the present invention provides the following steps:
a. stripping of the waters to be treated;
b. precondensation of the stripping gases at - 5°C by means of heat pump in order to avoid entry of the water into the cryogenic condensation system working with liquid nitrogen.
c. treatment of the stripping gas by means of cryogenic condensation with liquid nitrogen (condensation temperatures comprised between -10 °C and - 150 °C);
d. recovery of the condensates by means of defrosting and recycle of aqueous fractions at the head of stripper;
e. treatment of the non condensable compounds on activated carbons on air side;
f. recycle of the stripping gas in column (absence of discharge in atmosphere);
g. treatment for finishing the treated waters on activated carbons.

Hereinafter a brief description scheme is reported wherein the method according to the present invention is compared to the method described in IT 1359970. In the present invention, under the term volatile organic compound any compound having at 20°C a vapour pressure of 0.001 kPa or more is meant (Art. 268 of the Royal Decree 152/2006).

The waters to be treated first of all are stripped with an amount of stripping gas (N2 or air) at a flow of about 400 Nmc/h. The stripping device (or *stripper*) efficiency is put, in a precautionary way, at 95%. The stripping gas flow depends upon the plant size. The stripping gas reaches the saturation conditions imposed by the temperature and pressure of the column head (stripper). This involves a water content in the stream outgoing from the column head equal to about 6 kg/h for a temperature of about 15°C and a pressure of about 0.1 barg. The humidity in the stripping gas according to the teaching of IT 1359970 would be removed by freezing in the condensation system working with liquid nitrogen at temperatures near to -70 °C. Apart from generating waste of frigs, this causes a quick clogging of the condensation columns which makes it necessary the use of double units. A first unit (condensation column) is operating whereas the other one, as soon as is brought at room temperature and after the recoverage of the compounds which have solidified, is put in stand-by until the operating unit reaches high load losses (or ΔP equal to about 100 - 130 mbar). Upon reaching the above-mentioned ΔPs, the unit put in stand-by is then pre-cooled at -70°C and it starts operating in place of the "clogged" column which is put in defrosting to recover the locked contaminants. A consistent waste of liquid nitrogen is then dispersed by:
- freezing the inletting aqueous fraction (6 kg/h of water against 20 kg/h of contaminants);
- performing the necessary pre-coolings from one condensation column to the other one once the maximum ΔPs, which can be operated in the plant, are reached.

The present invention relates to the use of a fridge group allowing to pre-cool the gas outgoing from the column head at temperatures near to -5°C so as to block the almost totality of the aqueous fraction inletting the condensation columns. This will allow to lengthen by about 3 - 5 hours the interchanging time of the columns, thereby reducing also the liquid nitrogen consumption for pre-cooling the units before starting to operate. Furthermore, whereas in IT 13559970 the removal of the aqueous phases took place at expenses of the liquid nitrogen (0.22 €/kg), with the help of the refrigerating circuit the water vapour is eliminated by using electric energy (0.13 €/kWh). In this way the liquid nitrogen consumption can be reduced by about 35% with consistent economical savings.

All condensates will be entered suitable phase separators wherein the aqueous fraction is re-sent in head of the stripper whereas the organic condensates will be sent to R2 recovery disposal as secondary raw material and no more as disposal according to law. The R2 recovery typology defines the procedure for recovering solvents from waste provided by the Italian law in enclosure C in part IV of the Royal Decree 152/'06. Such operating methodology is valid in all Europe as the Italian law text only assimilates European directives and, in particular, in this case 75/442/EEC. In practical if the water content is lower than 0.5% as annual average and lower than 3% as peak, the petrochemical factory that has originated the EDC spill, which has caused the pollution of the ground water, re-purchases the product recovered from the ground waters as half-finished raw material. Without the R2 recovery operation, the recovered EDC has to be disposed out of site as waste at a price of about 500 - 1000 €/ton).

At the exit of the cryogenic condensation section the residual compounds (non condensable) existing in the stripping circuit are removed by adsorption on active carbon on air side. After treatment on activated carbons the gas is introduced again in the stripper for a new stripping cycle thus avoiding the discharge in atmosphere. The waters of the column bottom before being discharged on the receptor body are instead subjected to a finishing operation on array of activated carbons on water side. The streams of the preceding scheme are characterized hereinafter and the waste flows produced at each treatment section are described.

An additional object of the present invention is a plant for treating aqueous liquid waste as claimed in claims 8 and following ones.

Hereinafter, by referring to the enclosed figures, the results of the treatments of liquid residuals with the aim of reducing the pollutants thereof are reported: in particular two comparison examples by using the conventional methodology (Comparison example 1) and the one described in IT 1359970 (Comparison example 2) respectively and an example (Example 1) according to the method of the present invention. The liquid wastes to be treated (ground waters) contained the pollutants in the type and quantity enlisted hereinafter:
- Aliphatic materials as n-hexane 4 ppm
- Aromatic materials (as Benzene) 12 ppm
- Halogen materials (as 1,2-dichloroethane) 2200 ppm
Plan flow: 10 mc/h

The mass loads are equal to:
- Aliphatic materials as n-hexane 40 g/h
- Aromatic materials 120 g/h
- 1,2-dichloroethane 22000 g/h

### Comparison example 1

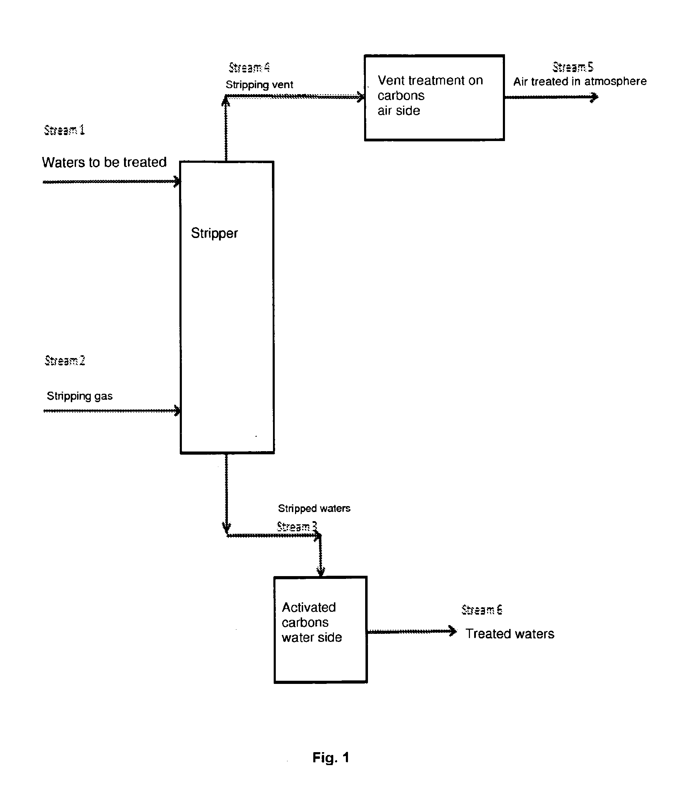

The following description makes reference to Figure 1
Stream 1 - (waters to be treated):
   ➢ Q = 15 mc/h;
   ➢ Physical state= liquid;
   ➢ Temperature = about 18°C
   ➢ HC as n-hexane: 40 g/h;
   ➢ Benzene: 120 g/h;
   ➢ 1,2-dichloroethane 22000 g/h.
Stream 2 - (stripping gas):
   ➢ Q = 400 Nmc/h;
   ➢ Physical state= gaseous;
   ➢ Temperature = about 18°C
   ➢ Pressure = 0.2 barg
   ➢ HC as n-hexane: 0 g/h;
   ➢ Benzene: 0 g/h;
   ➢ 1,2-dichloroethane 0g/h.
Stream 4 - (stripping vent):
   ➢ Q = 400 Nmc/h;
   ➢ Physical state= gaseous;
   ➢ Temperature = about 18°C
   ➢ Pressure = 0.1 barg
   ➢ HC as n-hexane: 38 g/h;
   ➢ Benzene: 114 g/h;
   ➢ 1,2-dichloroethane 20900 g/h.
Stream 5 - (venting in atmosphere):
   ➢ Q = 400 Nmc/h;
   ➢ Physical state= gaseous;
   ➢ Temperature = about 18°C
   ➢ Pressure = 0.05 barg
   ➢ according to Royal Decree 152/'06 [Italian Law provision]
   ➢ HC as n-hexane: 600 mg/Nmc;
   ➢ Benzene: 5 mg/Nmc as sum of Benzene and EDC;
   ➢ 1,2-dichloroethane 5 mg Nmc as sum of Benzene and EDC.
Stream 3 - (stripped waters):
   ➢ Q= 15 mc/h;
   ➢ Physical state= liquid;
   ➢ Temperature = about 18°C
   ➢ HC as n-hexane: 2 g/h;
   ➢ Benzene: 6 g/h;
   ➢ 1,2-dichloroethane 1100 g/h.
Stream 6 - (treated waters):
   ➢ Q = 15 mc/h;
   ➢ Physical state= liquid;
   ➢ Temperature = about 18°C
   ➢ HC as n-hexane: < 5 ppm;
   ➢ Benzene: < 0.2 ppm;
   ➢ 1,2-dichloroethane < 1 ppm.

Hereinafter the specific waste production after the unitary procedures shown in the previous scheme is reported:
Active carbons on air side:
   ➢ Mass load to be removed = about 21000 g/h;
   ➢ adsorb. Coeff. = 80 g VOC/Kg exhausted carbon;
   ➢ Production of exhausted active carbons = 263 kg/h Active carbons on water side:
   ➢ Mass load to be removed = about 1110 g/h;
   ➢ adsorb. Coeff. = 40 g VOC/Kg exhausted carbon;
   ➢ Production of exhausted active carbons = 28 kg/h

The hourly cost for the treatment is estimated in the following paragraph.

| | |
|---|---|
| Unitary cost for supplying activated carbons: | 1 €/kg |
| Cost for the disposal of active carbons (about): | 300 €/ton |
| Cost for supplying carbons: (28kg/h + 263kg/h) * 1€/kg = | 291 €/h |
| Cost for the disposal of carbons: (28kg/h + 263 kg/h)/1000 * 300 €/ton = | 87 €/h |
| Total cost of the treatment = | 378 €/h |

### Comparison example 2

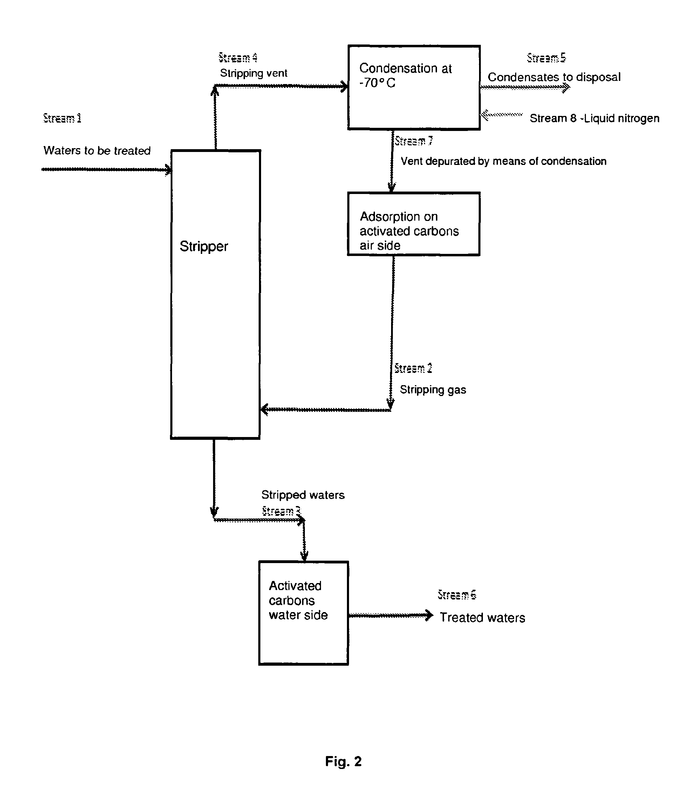

The following description makes reference to Figure 2. The streams of the preceding scheme are characterized hereinafter and the waste flows produced at each treatment sections are described.
Stream 1 - (waters to be treated):
   ➢ Q = 15 mc/h;
   ➢ Physical state= liquid;
   ➢ Temperature = about 18°C
   ➢ n-hexane: 40 g/h;
   ➢ Benzene: 120 g/h;
   ➢ 1,2-dichloroethane 22000 g/h.
Stream 2 - (stripping gas):
   ➢ Q = 400 Nmc/h;
   ➢ Physical state= gaseous;
   ➢ Temperature = about 18°C
   ➢ Pressure = 0.2 barg
   ➢ n-hexane: about 0 g/h;
   ➢ Benzene: about 0 g/h;
   ➢ 1,2-dichloroethane about 0 g/h.
Stream 4 - (stripping vent):
   ➢ Q = 400 Nmc/h;
   ➢ Physical state= gaseous;
   ➢ Temperature = about 18°C
   ➢ Pressure = 0.1 barg
   ➢ n-hexane: 38 g/h;
   ➢ Benzene: 114 g/h;
   ➢ 1,2-dichloroethane 20900 g/h;
   ➢ water about 6000 g/h;
   ➢ Note: the aqueous phase is the one due to the humidity existing in the stripping gas (RH relative humidity=100% Tsat = 18°C).
Stream 5 - (condensates for disposal):
   ➢ Q = 400 Nmc/h;
   ➢ Physical state= liquid;
   temperature = room
   ➢ Pressure = atmospherical
   ➢ n-hexane: 0 g/h;
   ➢ Benzene: 36 g/h;
   ➢ 1,2-dichloroethane 19855 g/h
   ➢ water about 6000 g/h;
   ➢ Note: the aqueous phase is the one due to the humidity existing in the stripping gas (RH relative humidity = 100% Tsat = 18°C).
Stream 8 - (liquid nitrogen by feeding cryogenic condensation system)
   ➢ Q = about 110 kg/h
   Pressure = 6 barg;
   ➢ Liquid physical state = liquid;
   ➢ temperature = -176°C.
Stream 7 - (finishing on activated carbons on air side):
   ➢ Q = 400 Nmc/h;
   ➢ Physical state= gaseous;
   ➢ temperature = about 18°C
   ➢ Pressure = 0.05 barg
   ➢ n-hexane: 114 g/h;
   ➢ Benzene: 2 g/h;
   ➢ 1,2-dichloroethane 1045 g/h.
Stream 3 - (stripped waters):
   ➢ Q = 15 mc/h;
   ➢ Physical state= liquid;
   ➢ temperature = about 18°C
   ➢ n-hexane: 2 g/h;
   ➢ Benzene: 6 g/h;
   ➢ 1,2-dichloroethane 1100 g/h.
Stream 6 - (treated waters):
   ➢ Q= 15 mc/h;
   ➢ Physical state= liquid;
   ➢ Temperature = about 18°C
   ➢ n-hexane: < 5 ppm;
   ➢ Benzene: < 0.2 ppm;
   ➢ 1,2-dichloroethane < 1 ppm.

The specific waste production after the unitary procedures shown in the previous scheme is reported hereinafter:
Active carbons on air side:
   ➢ Mass load to be removed= about 1161 g/h;
   ➢ adsorb. Coeff. = 80 g VOC/Kg exhausted carbon;
   ➢ Production of exhausted activated carbons = 14,5 kg/h
Active carbons on water side:
   ➢ Mass load to be removed= about 1110 g/h;
   ➢ adsorb. Coeff. = 40 g VOC/Kg exhausted carbon;
   ➢ Production of exhausted activated carbons = 28 kg/h
Organic condensates:
   ➢ 26 kg/h, 6 kg/h thereof of water

The hourly cost for the treatment is estimated in the following paragraph.

| | |
|---|---|
| Unitary cost for supplying activated carbons: | 1 €/kg |
| Cost for the disposal of the activated carbons (about): | 300 €/ton |
| Cost for purchasing liquid nitrogen: | 0.22 €/kg |
| Cost for the disposal of condensates | 500 €/ton |
| Cost for supplying carbons: (28kg/h + 14,5 kg/h) * 1€/kg = | 42.5 €/h |
| Cost for the disposal of carbons: (28kg/h + 14,5 kg/h)/1000 * 300 €/ton = | 12.7 €/h |
| Cost for purchasing liquid nitrogen: (0,22 €/kg * 110 kg/h) = | 24 €/h |
| Cost for the disposal of condensates: (26 kg/h /1000 * 500 €/ton) = | 13 €/h |
| Total treatment cost = | 92.2 €/h |

### Example 1

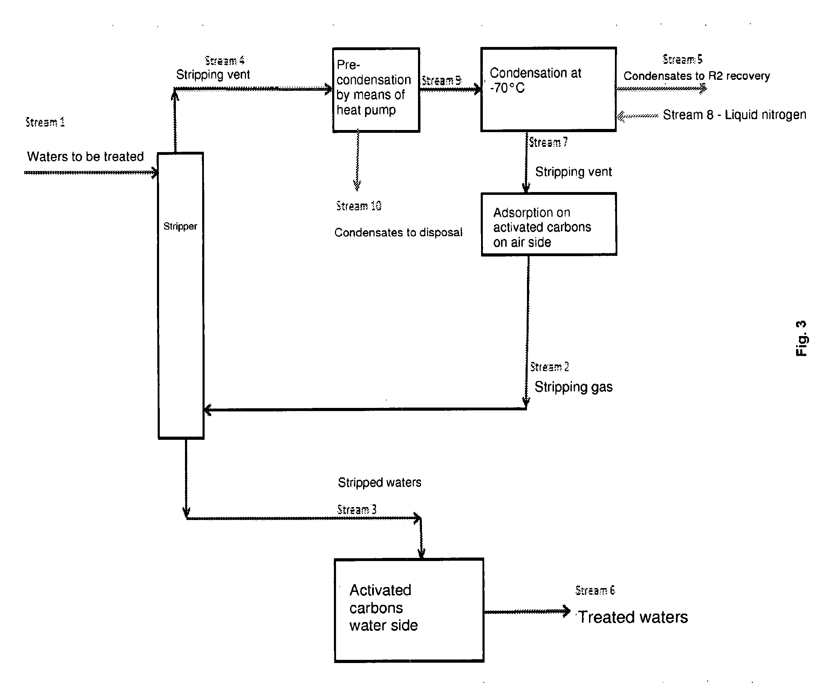

The following description makes reference to Figure 3.
Stream 1 - (waters to be treated):
   ➢ Q = 15 mc/h;
   ➢ Physical state= liquid;
   ➢ Temperature = about 18°C
   ➢ n-hexane: 40 g/h;
   ➢ Benzene: 120 g/h;
   ➢ 1,2-dichloroethane 22000 g/h.
Stream 2 - (stripping gas):
   ➢ Q = 400 Nmc/h;
   ➢ Physical state= gaseous;
   ➢ Temperature = about 18°C
   ➢ Pressure = 0.2 barg
   ➢ n-hexane: about 0 g/h;
   ➢ Benzene: about 0 g/h;
   ➢ 1,2-dichloroethane about 0 g/h.
Stream 4 - (stripping vent):
   ➢ Q = 400 Nmc/h;
   ➢ Physical state= gaseous;
   ➢ Temperature = about 18°C
   ➢ Pressure = 0.1 barg
   ➢ n-hexane: 38 g/h;
   ➢ Benzene: 114 g/h;
   ➢ 1,2-dichloroethane 20900 g/h
   ➢ water about 6000 g/h;
   ➢ Note: the aqueous phase is the one due to the humidity existing in the stripping gas (RH relative humidity = 100% Tsat = 18°C).
Stream 5 - (condensates for disposal):
   ➢ Physical state= liquid;
   ➢ Temperature = room
   ➢ Pressure = atmospherical
   ➢ n-hexane: 0 g/h;
   ➢ Benzene: 36 g/h;
   ➢ 1,2-dichloroethane 19855 g/h
   ➢ water about 0 g/h;
Stream 8 - (liquid nitrogen for feeding cryogenic condensation system)
   ➢ Q = about 72 kg/h
   ➢ Pressure = 6 barg;
   ➢ Liquid physical state = liquid;
   ➢ Temperature = -176°C.
Stream 7 - (finishing on active carbons on air side):
   ➢ Q = 400 Nmc/h;
   ➢ Physical state= gaseous;
   ➢ Temperature = about 18°C
   ➢ Pressure = 0.05 barg
   ➢ n-hexane: 114 g/h;
   ➢ Benzene: 2 g/h;
   ➢ 1,2-dichloroethane 1045 g/h.
Stream 3 - (stripped waters):
   ➢ Q = 15 mc/h;
   ➢ Physical state= liquid;
   ➢ Temperature = about 18°C
   ➢ n-hexane: 2 g/h;
   ➢ Benzene: 6 g/h;
   ➢ 1,2-dichloroethane 1100 g/h.
Stream 6 - (treated waters):
   ➢ Q = 15 mc/h;
   ➢ Physical state= liquid;
   ➢ Temperature = about 18°C
   ➢ n-hexane: < 5 ppm;
   ➢ Benzene: < 0.2 ppm;
   ➢ 1,2-dichloroethane < 1 ppm.
Stream 9 - (condensation group output)
   ➢ Q= 400 Nmc/h;
   ➢ Physical state= gaseous;
   ➢ Temperature = about -5 °C
   ➢ Pressure = 0.1 barg
   ➢ n-hexane: 38 g/h;
   Benzene: 114 g/h;
   ➢ 1,2-dichloroethane 20900 g/h
   ➢ water almost absent.
Stream 10 - (precondensation group output)
   ➢ Q = about 6 kg/h;
   ➢ Physical state= liquid;
   ➢ Temperature = room
   ➢ Pressure = atmospherical
   ➢ water 6 kg/h;
   ➢ Organic contaminants will be further present depending upon the features of the inletting waters.
   ➢ n-hexane: about 0 g/h;
   ➢ Benzene: about 0 g/h;
   ➢ 1,2-dichloroethane about 22 g/h

The specific waste production after the unitary procedures shown in the previous scheme is reported hereinafter:
Activated carbons on air side:
   ➢ Mass load to be removed= about 1161 g/h;
   ➢ adsorb. Coeff. = 80 g VOC/Kg exhausted carbon;
   ➢ Production of exhausted activated carbons = 14.5 kg/h
Activated carbons on water side:
   ➢ Mass load to be removed= about 1110 g/h;
   ➢ adsorb. Coeff. = 40 g VOC/Kg exhausted carbon;
   ➢ Production of exhausted activated carbons = 28 kg/h
Organic condensates:
   ➢ about 20 kg/h.

The frigs necessary to the precondensation amount to about 6000 kcal/h. In a precautionary way one assumes a consumption of about 12000 kcal/h. By imposing a COP fridge equal to 2.5 it is obtained that the electric chiller will need a power equal to about 6 kW.

The hourly cost for the treatment is estimated in the following paragraph.

| | |
|---|---|
| Unitary cost for supplying activated carbons: | 1 €/kg |
| Cost for the disposal of activated carbons (c.a.): | 300 €/ton |
| Cost for purchasing liquid nitrogen: | 0.22 €/kg |
| Cost for the disposal of condensates | 500 €/ton |
| Electric energy unitary cost | 0.13 €/kWh |
| Cost for supplying carbons: (28kg/h + 14,5 kg/h) * 1€/kg = | 42.5 €/h |
| Cost for the disposal of carbons: (28kg/h + 14,5 kg/h)/1000 * 300 €/ton = | 12.7 €/h |
| Cost for purchasing liquid nitrogen: (0,22 €/kg * 72 kg/h) = | 16 €/h |
| Cost for the disposal of condensates: (20 kg/h /1000 * 500 €/ton) = | 10 €/h |
| Electric energy cost for heat pump : (6 kw * 0,13 €/kW/h) = | 0.78 € |
| Total treatment cost = | 81.98 €/h |

### Comparison between the methods of prior art and the of the invention

| Description | Advantages | Drawbacks | Economical aspects | Environmental aspects |
|---|---|---|---|---|
| Conventional solution - stripping and adsorption on activated carbons with discharge in atmosphere. | Simplicity of the plant engineering solution and linearity of the operating management. | High consumption of the adsorbing materials. Need for reserve filters always available. | High management cost: 378 €/h. Mainly due to the costs for the supply and disposal of the adsorbing materials. | Discharge in atmosphere of carcinogenic organic compounds even if with modest amounts. High waste production per mc of treated water (293 kg/h activated exhausted carbons). |
| Solution according to IT 1359970 - Closed circuit stripping and cryogenic condensation. | Reduced waste production. | High investment costs. (however that may be amortized in quite short periods - 1 year). The cryogenic condensation system requires an initial cost near to about 500,000 € | Management cost lowering to 92€/h. The lowering is mainly due to the reduced consumption of adsorbing materials. | Absence of discharge in atmosphere. Reduced specific waste production (43 kg/h active carbons + 26 kg/h of condensates). |
| Solution according to the invention - Closed circuit stripping precondensation with fridge group and cryogenic condensation. | Reduced waste production (43 kg/h exhausted carbons). The condensates are recovered as secondary raw material. | High investment costs. The precondensation system requires an investment of about 80000 € | Management cost lowering by about 80% (management cost equal to 82 €/h). | Absence of discharge in atmosphere. Possibility of recovering the contaminants as secondary raw material thanks to the absence of aqueous fraction in the condensates. |

As the table shows, the method of the present invention maximizes the system utility and lowers the management costs for the treatment of waste containing volatile, chlorinated and not chlorinated organic compounds. Furthermore, the condensates can be recovered as secondary raw material by reducing considerably the amount of waste produced for m³ of treated water.

An additional object of the present invention is a plant for the treatment of liquid waste containing volatile organic contaminants, in particular of contaminated ground waters, according to claim 9. By referring to figure 3, the plant comprises in a closed circuit and in sequence a stripper or stripping device, wherein the waters to be treated are introduced, and therefrom the treated waters outgo, which waters can be fed to an additional treatment, advantageously on activated carbons in a separate unit, before being discharged outside. Whereas usually columns are used in a variant of the invention, for the stripping procedure vacuum desorbers. The water containing the pollutants outgoing from the stripper is fed to a precondensation unit working at temperatures from - 2 to -10°C wherein a first reduction of the water content by means of freezing takes place. The condensates outgoing from this unit go to the disposal. The remained gas, which still contains water and pollutants, is subjected to a condensation in a condensation unit at temperatures between - 20 and - 150°C. Such unit is advantageously formed by a plurality of exchangers in sequence; in a preferred embodiment the exchangers are two. From the condensation unit the condensates go to R2 recovery as the water average content of the eliminated main contaminant, dichloro ethane, is such as to make possible re-using the dichloroethane itself. The stripping gas, advantageously after depuration on activated carbons, can be re-used in the stripping units. Even if not shown, the plant provides control, safety and adjusting systems such as for example *vents.*

## Claims

1. A method for treating liquid waste containing volatile organic contaminants, comprising the following steps:
a. stripping said liquid waste in a stripper with a stripping gas with obtainment of a gas enriched with contaminants and liquid waste partially without contaminants
b. cryogenic condensation of said gas obtained from said step a) at temperatures comprised between - 20 and - 150° C with separation of condensates
**characterized in that** after said step a) said enriched gas is subjected to a precondensation at T between - 2 and -10 °C.

2. The method according to claim 1, wherein said liquid waste contains organic contaminants belonging to the class formed by both aliphatic and aromatic, possibly halogenated, volatile organic compounds.

3. The method according to at least one of the previous claims, wherein said liquid waste comprises contaminated ground waters.

4. The method according to at least one of the previous claims, wherein the contaminants contained in the stripping gas are removed when the concentration thereof in the stripping gas is > 10 g/Nm3, the flow of the stripping gas is < 2000 Nm3/h. and the temperature is comprised between - 60°C and - 80°C.

5. The method according to at least one of the previous claims, wherein the stripping gas is chosen from the class formed by air and nitrogen.

6. The method according to at least one of the previous claims, wherein after said step b) said gas is re-used in subsequent stripping steps, after preventive depuration.

7. The method according to at least one of the previous claims, wherein the condensates obtained from said precondensation step are sent to disposal and the condensates obtained from said condensation procedure are sent to R2 recovery.

8. The method according to at least one of the previous claims, wherein said liquid waiste obtained from said step a) are sent to a depuration treatment.

9. A plant for treating liquid waste containing volatile organic contaminants, comprising in a closed circuit and in sequence
a. a stripper,
b. at least a condensation unit
c. at least an adsorption unit on activated carbons on side of air
d. means for fluid connection
**characterized in that** at least a precondensation unit is provided after said stripper and before said condensation unit.

10. The plant according to claim 9, wherein means for preventing the discharge in atmosphere of the stripping gases is provided

11. The plant according to at least one of claims 9 to 10, wherein said stripper is in fluid connection outside the closed circuit with a water treatment unit with activated carbons, said precondensation unit is in fluid connection outside the closed circuit with a unit for the disposal of condensates and said condensation unit is in fluid connection outside the closed circuit with a unit for feeding condensates to R2 recovery.

12. The plant according to at least one of claims 9 to 11, wherein the stripping columns are chosen from the group comprising plate columns and packed columns.

13. The plant according to at least one of claims 9 to 12, wherein the means for performing the stripping procedure comprises vacuum desorbers.

## Patentansprüche

1. Ein Verfahren zur Behandlung von flüssigem Abfall, der flüchtige organische Schadstoffe enthält, welches folgende Schritte umfasst:
a. Strippen des flüssigen Abfalls in einem Stripper mit einem Strippgas, wobei ein mit Schadstoffen angereichertes Gas und flüssiger Abfall zum Teil ohne Schadstoffe erhalten werden
b. kryogene Kondensation des im Schritt a) erhaltenen Gases bei Temperaturen zwischen -20 und -150°C, einhergehend mit Trennung von Kondensaten,
**dadurch gekennzeichnet, dass** nach Schritt a) das angereicherte Gas einer Vorkondensation bei T zwischen -2 und -10°C unterzogen wird.

2. Das Verfahren nach Anspruch 1, wobei der flüssige Abfall organische Schadstoffe enthält, die zu der Klasse gehören, die sich sowohl aus aliphatischen als auch aromatischen, möglicherweise halogenierten, flüchtigen organischen Verbindungen zusammensetzt.

3. Das Verfahren nach mindestens einem der vorherigen Ansprüche, wobei der flüssige Abfall kontaminiertes Grundwasser umfasst.

4. Das Verfahren nach mindestens einem der vorherigen Ansprüche, wobei die im Strippgas enthaltenen Schadstoffe entfernt werden, wenn die Konzentration davon im Strippgas > 10 g/Nm³ beträgt, der Strippgasstrom < 2000 Nm³/h beträgt und die Temperatur zwischen - 60°C und - 80°C liegt.

5. Das Verfahren nach mindestens einem der vorherigen Ansprüche, wobei das Strippgas aus der Klasse, die sich aus Luft und Stickstoff zusammensetzt, gewählt wird.

6. Das Verfahren nach mindestens einem der vorherigen Ansprüche, wobei nach Schritt b) das Gas nach präventiver Aufbereitung in anschließenden Strippschritten wiederverwendet wird.

7. Das Verfahren nach mindestens einem der vorherigen Ansprüche, wobei die bei dem Vorkondensationsschritt erhaltenen Kondensate einer Entsorgung zugeführt werden und die durch das Kondensationsverfahren erhaltenen Kondensate einer R2 Rückgewinnung zugeführt werden.

8. Das Verfahren nach mindestens einem der vorherigen Ansprüche, wobei der im Schritt a) erhaltene flüssige Abfall einer Aufbereitungsbehandlung zugeführt werden.

9. Eine Anlage zur Behandlung von flüssigem Abfall, der flüchtige organische Schadstoffe enthält, in einem abgeschlossenen Kreislauf und der Reihe nach umfassend
a. einen Stripper,
b. mindestens eine Kondensationseinheit
c. mindestens eine Adsorptionseinheit an Aktivkohle auf der Luftseite
d. eine Vorrichtung für eine Flüssigkeitsverbindung
**dadurch gekennzeichnet, dass** mindestens eine Vorkondensationseinheit nach dem Stripper und vor der Kondensationseinheit bereitgestellt wird.

10. Die Anlage nach Anspruch 9, wobei eine Vorrichtung zur Verhinderung der Freisetzung der Strippgase in die Atmosphäre bereitgestellt ist

11. Die Anlage nach mindestens einem der Ansprüche 9 bis 10, wobei der Stripper außerhalb des geschlossenen Kreislaufes in einer Flüssigkeitsverbindung mit einer Wasseraufbereitungseinheit mit Aktivkohle steht, die Vorkondensationseinheit außerhalb des geschlossenen Kreislaufes in einer Flüssigkeitsverbindung mit einer Einheit zur Entsorgung von Kondensaten steht und die Kondensationseinheit außerhalb des geschlossenen Kreislaufes in einer Flüssigkeitsverbindung mit einer Einheit für die Zufuhr von Kondensaten zu einer R2 Rückgewinnung steht.

12. Die Anlage nach mindestens einem der Ansprüche 9 bis 11, wobei die Strippkolonnen aus der Gruppe, die Bodenkolonnen und Füllkörperkolonnen umfasst, ausgewählt sind.

13. Die Anlage nach mindestens einem der Ansprüche 9 bis 12, wobei die Vorrichtung zur Durchführung des Strippverfahrens Vakuumdesorber umfasst.

## Revendications

1. Procédé pour traiter des effluents liquides contenant des polluants organiques volatils, comportant les étapes suivantes :
a. strippage desdits effluents liquides dans un strippeur à l'aide d'un gaz de strippage, ce qui aboutit à l'obtention d'un gaz enrichi en polluants et d'effluents liquides partiellement dépollués ;
b. condensation cryogénique dudit gaz obtenu à la suite de ladite étape a) à des températures de -20 à -150°C, avec séparation de condensats,
**caractérisé en ce que**, après ladite étape a), ledit gaz enrichi subit une précondensation à une température T de -2 à -10°C.

2. Procédé (10) selon la revendication 1, dans lequel lesdits effluents liquides contiennent des polluants appartenant à la classe constituée par les composés organiques volatils aliphatiques et aromatiques, éventuellement halogénés.

3. Procédé selon au moins l'une des revendications précédentes, dans lequel lesdits effluents liquides comprennent des eaux souterraines polluées.

4. Procédé selon au moins une des revendications précédentes, dans lequel les polluants contenus dans le gaz de strippage sont séparés lorsque leur concentration dans le gaz de strippage est > 10 g/Nm³ et que la température est de - 60°C à -80°C.

5. Procédé selon au moins l'une des revendications précédentes, dans lequel le gaz de strippage est choisi entre l'air et l'azote.

6. Procédé selon au moins l'une des revendications précédentes, dans lequel, après ladite étape b), ledit gaz est réutilisé au cours d'étapes de strippage ultérieures, après avoir subi une épuration préventive.

7. Procédé selon au moins l'une des revendications précédentes, dans lequel les condensats obtenus à la suite de ladite étape de précondensation sont envoyés dans un centre d'élimination et les condensats obtenus à la suite de ladite opération de condensation sont envoyés dans un centre de récupération certifié R2.

8. Procédé selon au moins l'une des revendications précédentes, dans lequel lesdits effluents liquides obtenus à la suite de ladite opération de condensation sont envoyés dans un centre de traitement d'épuration.

9. Installation pour traiter des effluents liquides contenant des polluants organiques volatils, comportant un circuit fermé et, successivement
a. un strippeur,
b. au moins une unité de condensation,
c. au moins une unité d'adsorption sur charbon actifs du côté exposé à l'air,
d. un moyen de communication fluidique,
**caractérisée en ce qu'**au moins une unité de précondensation est présente après ledit strippeur et avant ladite unité de condensation.

10. Installation selon la revendication 9, dans laquelle est présent un moyen pour empêcher le rejet des gaz de strippage dans l'atmosphère.

11. Installation selon au moins une des revendications 9 et 10, dans laquelle ledit strippeur est en communication fluidique, hors du circuit fermé, avec une unité de traitement d'eau à charbon actif, ladite unité de précondensation est en communication fluidique, hors du circuit fermé, avec une unité pour l'élimination des condensats et ladite unité de condensation est en communication fluidique, hors du circuit fermé, avec une unité pour envoyer les condensats dans un centre de récupération certifié R2.

12. Installation selon au moins une des revendications 9 à 11, dans laquelle les colonnes de strippage sont choisies entre des colonnes à plaques et des colonnes à garnissage.

13. Installation selon au moins une des revendications 9 à 12, dans laquelle le moyen pour réaliser l'opération de strippage comprend des désorbeurs à dépression.
